# EUROPÄISCHE PATENTSCHRIFT

(11) **EP 3 126 694 B1**
(45) Veröffentlichungstag und Bekanntmachung des Hinweises auf die Patenterteilung: **09.10.2019**
(21) Anmeldenummer: 15714762.0
(22) Anmeldetag: 17.03.2015
(51) Int. Cl.: F16D 13/75

(54) **REIBKUPPLUNG ZUM FESTKLEMMEN EINER KUPPLUNGSSCHEIBE ZWISCHEN EINER ANPRESSPLATTE UND EINER DRUCKPLATTE FÜR EINEN KRAFTFAHRZEUGANTRIEBSSTRANG**
FRICTION CLUTCH FOR FIXEDLY CLAMPING A CLUTCH DISC BETWEEN A PRESSURE PLATE AND A THRUST PLATE FOR A MOTOR VEHICLE DRIVETRAIN
EMBRAYAGE À FRICTION DESTINÉ AU SERRAGE À BLOC D'UN DISQUE D'EMBRAYAGE ENTRE UN PLATEAU D'APPUI ET UN PLATEAU DE PRESSION POUR UNE CHAÎNE CINÉMATIQUE DE VÉHICULE AUTOMOBILE

(30) Priorität: 02.04.2014 DE 102014206299
(43) Veröffentlichungstag der Anmeldung: 08.02.2017
(73) Patentinhaber: Schaeffler Technologies AG & Co. KG, 91074 Herzogenaurach (DE)
(72) Erfinder: AHNERT, Gerd, 77880 Sasbach (DE)
(86) Internationale Anmeldenummer: PCT/DE2015/200164
(87) Internationale Veröffentlichungsnummer: WO 2015/149780

(56) Entgegenhaltungen:
- EP-A1- 2 682 624
- DE-A1-102010 034 810
- DE-A1-102010 035 120
- DE-A1-102011 104 414

## Beschreibung

Die Erfindung betrifft eine Reibkupplung zum Festklemmen einer Kupplungsscheibe zwischen einer Anpressplatte und einer Druckplatte für einen Kraftfahrzeugantriebsstrang, mit einem Kupplungsdeckel, an dem ein Hebel, vorzugsweise in Form einer Tellerfeder, schwenkbar gelagert ist, um eine Anpressplatte zum Festklemmen der Kupplung zu verlagern, wobei die Anpressplatte vorzugsweise axial verlagert wird, und mit einer weggesteuert bzw. wegfühlend Verschleiß im Klemmbereich erfassenden Nachstelleinrichtung, und mit einer zwischen der Anpressplatte und dem Hebel angeordneten Verstelleinrichtung, etwa nach Art eines Rampenrings, zum Ausgleichen des Verschleißes.

Die gattungsgemäße Reibkupplung kann dazu vorgesehen sein, in einem Antriebsstrang eines Kraftfahrzeuges angeordnet zu werden. Der Antriebsstrang kann eine Verbrennungskraftmaschine und ein Getriebe aufweisen. Der Antriebsstrang kann ferner einen Drehschwingungsdämpfer wie ein Zweimassenschwungrad aufweisen. Bevorzugt wird, dass die Reibkupplung in dem Kraftfahrzeugantriebsstrang zwischen der Verbrennungskraftmaschine und dem Getriebe oder zwischen dem Drehschwingungsdämpfer und dem Getriebe vorgesehen ist. Der Kraftfahrzeugantriebsstrang kann ferner die Kupplungsscheibe und die Druckplatte aufweisen. Beispielsweise kann ein mit der Verbrennungskraftmaschine oder dem Drehschwingungsdämpfer verbundenes Schwungrad als Druckplatte verwendet werden. Beispielsweise kann die Kupplungsscheibe mit einer Eingangswelle des Getriebes drehfest verbunden sein.

In der WO 2009/056092 A1 wird eine Reibungskupplung beschrieben, bestehend zumindest aus einem Kupplungsgehäuse mit einer drehfest und axial begrenzt zu dieser verlagerbaren Druckplatte, die von einem sich am Kupplungsgehäuse abstützenden Hebelsystem gegenüber einer am Kupplungsgehäuse fest angeordneten Anpressplatte unter Verspannung von Reibbelägen einer Kupplungsscheibe zum Öffnen und Schließen der Reibungskupplung axial verlagerbar ist, wobei in Abhängigkeit einer Änderung eines Abstands zwischen der Anpressplatte und der Druckplatte ein Formschluss zwischen einer Verdreheinrichtung, die ein zwischen der Druckplatte und dem Hebelsystem angeordnetes Rampensystem zum Ausgleich eines bei Verschleiß auftretenden Fehlabstands zwischen der Druckplatte und dem Hebelsystem verdreht, und einer Steuereinrichtung, die die Verdreheinrichtung mittels des Formschlusses steuert, erfolgt und die Verdreheinrichtung mittels der Steuereinrichtung bei sich öffnender Reibungskupplung verdreht wird.

Die WO 2009/056092 A1 beschreibt, dass bei dem teilweise ausgerückten Zustand die axial verlagerbare Druckplatte über die Verstelleinrichtung und das Hebelsystem mit einem Anschlag in Anlage kommt, wobei dieser Anschlag an einem Federelement angebracht ist, welches wiederum an dem Kupplungsgehäuse, bzw. Kupplungsdeckel, angebracht ist. Wird die Reibungskupplung weiter ausgerückt, nimmt das Hebelsystem über dem Anschlag das mit diesem in Anlage befindliche Federelement axial mit.

Andere Reibungskupplungen mit Verstelleirichtung zum Ausgleich des Verschleisses sind in den Druckschriften DE 10 2010 034 810 A1, DE 10 2011 104 414 A1 und EP 2 682 624 A1 beschrieben.

Wird dieser Anschlag von der Tellerfeder mitgenommen, bzw. von der Tellerfeder gesteuert, so kann bei geöffneter Kupplung durch dynamische Axialschwingungen der Anpressplatte eine ungewollte Nachstellung an der Nachstellungseinrichtung erfolgen.

Gemäß der Diktion von WO 2009/056092 A1 wird die axial unverrückbare Platte als Anpressplatte bezeichnet und wird die axial begrenzt verlagerbare Platte als Druckplatte bezeichnet. Im Gegensatz hierzu wird im Folgenden die axial nicht verlagerbare Platte als Druckplatte bezeichnet und wird die axial verlagerbare Platte als Anpressplatte bezeichnet. Ein (Kupplungs-)Zustand, bei welchem die Druckplatte, die Kupplungsscheibe und die Anpressplatte miteinander verklemmt sind, wird auch als geschlossener oder eingerückter Zustand bezeichnet. Der geschlossene Zustand wird auch als Betriebspunktlage bezeichnet. Ein (Kupplungs-)Zustand, bei welchem die Druckplatte, die Kupplungsscheibe und die Anpressplatte nicht festgeklemmt sind, wird auch als teilweise eingerückter Zustand, teilweise ausgerückter Zustand, ausgerückter Zustand, teilweise geschlossener Zustand, teilweise geöffneter Zustand oder geöffneter Zustand bezeichnet. Hierfür ist auch der Begriff Abhublage gebräuchlich.

Es ist somit die Aufgabe der vorliegenden Erfindung, eine Reibkupplung vorzusehen, bei welcher ein Verschleiß im Klemmbereich weggesteuert erfasst und ausgeglichen wird, wobei keine dynamischen Nachstellungen erfolgen. Es ist ferner eine Aufgabe der vorliegenden Erfindung, eine Relativwegregelung oder Relativwegsteuerung oder Relativwegbegrenzung einer weggesteuerten, bzw. wegfühlenden Nachstelleinrichtung in einfacher Weise vorzusehen. Eine weitere Aufgabe der vorliegenden Erfindung liegt darin, eine Klemmkraft zwischen Hebel und Verstelleinrichtung oder zwischen Verstelleinrichtung und Anpressplatte zu reduzieren. Erfindungsgemäß gelöst wird diese Aufgabe durch eine Reibkupplung gemäß Patentanspruch 1. Bevorzugte Ausführungsbeispiele sind in den abhängigen Patentansprüchen dargelegt.

Die vorliegende Erfindung betrifft eine gattungsgemäße Reibkupplung zum Festklemmen einer Kupplungsscheibe zwischen einer Anpressplatte und einem Druckplatte für einen Kraftfahrzeugantriebsstrang, wobei ein kupplungsdeckelfester Anschlag vorgesehen ist, welcher zum Zusammenwirken mit einer zweiten Verstelleinrichtung vorgesehen ist, derart, dass eine Entfernungsbewegung der Anpressplatte von der Kupplungsseite weg begrenzt ist, wobei die zweite Verstelleinrichtung mit der ersten Verstelleinrichtung drehfest oder näherungsweise drehfest verbunden ist. Dieser Aspekt der vorliegenden Erfindung bietet die Möglichkeit, die Krafteinleitung in die Anpressplatte in Betriebspunktlage an einer anderen Stelle vorzunehmen, als die Krafteinleitung in die Anpressplatte in Abhublage. Hierdurch wird die erste Verstelleinrichtung in Abhublage entlastet, und wird die zweite Verstelleinrichtung in Betriebspunktlage entlastet. Die jeweils unbelastete, bzw. geringer belastete, Verstelleinrichtung lässt sich leichter verdrehen. Somit können die zum Verschleiß im Klemmbereich weggesteuert erfassenden und die zum Verschleiß-Ausgleichen vorgesehenen Teile kleiner und/oder leichter konstruiert werden, wodurch sich eine Bauraumersparnis oder eine Gewichtsersparnis an dem Fahrzeug ergibt.

Gemäß einem weiteren Aspekt der Erfindung ist der kupplungsdeckelfeste Anschlag als ein Niet an dem Kupplungsdeckel befestigt, wobei der Niet durch den Hebel hindurch reicht. Ein Niet kann in einfacher und kostengünstiger Weise angebracht werden. Zudem kann ein Niet während einem zeitlich vorgelagerten Herstellungsschritt mit einer optimierten Anschlaggeometrie, wie beispielsweise einem verbreiterten Nietkopf, einem konkaven Nietkopf, oder einem zentrierend wirkenden Nietkopf hergestellt werden.

Gemäß einem weiteren Aspekt der vorliegenden Erfindung ist die zweite Verstelleinrichtung ein Rampenring mit daran gebildeten Rampen, wobei sich der Rampenring bezogen auf eine Axialrichtung der Kupplungseinrichtung in Umfangsrichtung erstreckt, und wobei die Rampen der zweiten Verstelleinrichtung an zu den Rampen der zweiten Verstelleinrichtung komplementär an der Anpressplatte gebildeten Gegenrampen anliegen, so dass ein Verdrehen der zweiten Verstelleinrichtung in Umfangsrichtung der Reibkupplung relativ zu der Anpressplatte eine Abstandsänderung zwischen der Anpressplatte und einem von den Rampen entfernten Abschnitt der zweiten Verstelleinrichtung bewirkt. Eine solche Verstelleinrichtung ermöglicht in grundsätzlich bekannter Weise in Abhublage anpressplatten- und kupplungsdeckelfesten Anschlag verschleißneutral in Anlage zu bringen.

Die im Folgenden genannten Aspekte der Erfindung sind sämtlich mit allen vorgenannten Aspekten der Erfindung kombinierbar
Gemäß einem weiteren Aspekt der Erfindung wird der durch die Nachstelleinrichtung weggesteuert erfasste Verschleiß im Klemmbereich bei der Entfernungsbewegung der Anpressplatte von der Kupplungsscheibe weg ausgeglichen, wobei vorzugsweise der Ausgleich bei der Entfernungsbewegung ab dem Festklemmen bis zu einem Anliegen an den kupplungsdeckelfesten Anschlag ausgeglichen wird. Dieser Aspekt der Erfindung ist mit sämtlichen der Erfindung beliebig kombinierbar.

Gemäß einem weiteren Aspekt der Erfindung kann vorgesehen sein, dass der kupplungsdeckelfeste Anschlag insbesondere während eines Montage- oder Herstellungsprozesses eingestellt wird, wobei das Einstellen vorzugweise mittels Richten des Kupplungsdeckels erfolgt. Somit kann der kupplungsdeckelfeste Anschlag in einfacher Art und Weise an die bei der konkreten Kupplungsbaugruppe vorliegenden Toleranzlagen angepasst werden.

Gemäß einem weiteren Aspekt der vorliegenden Erfindung kann vorgesehen sein, dass die Verstelleinrichtung und/oder die Nachstelleinrichtung so bemessen ist, dass ein Erfassen des Verschleißes im Klemmbereich und/oder ein Verstellen zum Ausgleich des Verschleißes nur infolge eines Ausrückens der Kupplung bis zu zumindest einem vorab festgelegten Grad möglich ist. Dieser vorab festgelegte Grad an Ausrücken der Kupplung kann insbesondere ein näherungsweise vollständiges Ausrücken der Kupplung sein, das heißt, das Zusammenwirken der Verstelleinrichtung oder des Hebels oder der zweiten Verstelleinrichtung mit dem kupplungsdeckelfesten Anschlag. Es wird also vorgeschlagen, den Relativweg bei der Entfernungsbewegung so zu bemessen bzw. zu begrenzen, dass dieser näherungsweise einer Größe des weggesteuerten Erfassens der Nachstelleinrichtung entspricht. Infolgedessen kann ein ungewolltes Nachstellen der Verstelleinrichtung sicher verhindert werden, beispielsweise bei nicht vollständigem Ausrücken der Kupplung, beispielsweise wenn ein Fahrer das Kupplungspedal nicht "durchdrückt" sondern nur betätigt "bis die Kupplung geöffnet ist".

Gemäß einem weiteren Aspekt der Erfindung beinhaltet die Reibkupplung eine Hubeinrichtung, wobei eine von der Hubeinrichtung auf die Anpressplatte wirkende Hubkraft die Entfernungsbewegung der Anpressplatte von der Kupplungsscheibe weg bewirkt. Gemäß einem weiterbildenden Aspekt kann die Hubeinrichtung als eine Feder oder ein Federpaket ausgebildet sein, oder kann als eine Vielzahl von Federn oder von Federpaketen ausgebildet sein, welche bezogen auf eine Axialrichtung der Reibkupplung in Umfangsrichtung verteilt, vorzugsweise gleichmäßig verteilt, angeordnet sind. Eine Feder ist ein wohl bekanntes, kostengünstiges und mit einfachen Mitteln zu bemessendes Konstruktionselement. Eine Vielzahl von in Umfangsrichtung verteilt angeordneten Federn gewährleistet eine über die Umfangsrichtung gleichmäßige Hubkraft. Die Hubeinrichtung kann gemäß einem anderen weiterbildenden Aspekt dazu eingerichtet sein, die Anpressplatte in Begrenzungslage der Entfernungsbewegung, d.h. in einem Extremfall der Abhublage, mit einer Hubkraft anzupressen, wobei die Hubkraft in der Begrenzungslage zumindest 5% der Hubkraft in der Festklemmlage bzw. der Betriebspunktlage entspricht. Die Hubkraft gewährleistet somit die sichere Anlage der Anpressplatte in der Begrenzungslage. Insofern ist es auch wünschenswert, dass die Hubkraft in Begrenzungslage möglichst groß ist, gleichzeitig sollen die Hubeinrichtung und die Reibkupplung insgesamt nicht zu groß und zu schwer sein. Insofern stellen 5% der Hubkraft in Festklemmlage einen Kompromiss zwischen sicherer Anlage in Begrenzungslage und Systemgewicht dar. Bei höheren Anforderungen an Qualität des Anliegens in der Begrenzungslage kann ferner vorgesehen sein, dass die Hubkraft in der Begrenzungslage zumindest 10 %, zumindest 25 %, zumindest 33 % oder zumindest 50 % der Hubkraft in der Festklemmlage entspricht.

Gemäß einem weiteren Aspekt der Erfindung ist die Verstelleinrichtung, bzw. die erste Verstelleinrichtung, ein Rampenring mit daran gebildeten Rampen, wobei sich der Rampenring bezogen auf eine Axialrichtung der Kupplungseinrichtung in Umfangsrichtung erstreckt, und wobei die Rampen der Verstelleinrichtung an zu den Rampen der Verstelleinrichtung komplementär an der Anpressplatte gebildeten Gegenrampen anliegen, so dass ein Verdrehen der Verstelleinrichtung in Umfangsrichtung der Reibkupplung relativ zu der Anpressplatte eine Abstandsänderung zwischen der Anpressplatte und einem von den Rampen entfernten Abschnitt der Verstelleinrichtung bewirkt. Der Rampenring mit daran gebildeten Rampen ist in der zum Verstellen nötigen Kraft konstruktiv einstellbar, indem der Rampenwinkel konstruktiv eingestellt wird. Insofern ermöglicht der Rampenring eine effiziente und kostengünstige Verstelleinrichtung. Abhängig vom eingestellten Rampenwinkel kann eine Selbsthemmung erreicht werden.

Gemäß einem weiteren Aspekt der Erfindung kann vorgesehen sein, dass an dem Kupplungsdeckel eine Klinke gebildet ist, und/oder dass die Nachstelleinrichtung ein Ritzel, eine mit dem Ritzel drehfest verbundene Spindel und daran eine Spindelmutter beinhaltet. Dies kann derart weitergebildet werden, dass die Klinke und das Ritzel so bemessen und positioniert sind, dass die Klinke auf dem Ritzel gleitet, wenn kein Verschleiß oder nur geringer Verschleiß oder ein dem Verschleiß angemessener Grad an Verstellung der Verstelleinrichtung vorliegt, und dass die Klinke in das Ritzel formschlüssig eingreift, wenn der Verschleiß den vorliegenden Grad an Verstellung der Verstelleinrichtung übersteigt. Ferner kann vorgesehen sein, dass die Klinke an dem Kupplungsdeckel federnd gelagert ist, so dass die Klinke auf übermäßigen Druck von der Anpressplatte her zerstörungsfrei ausweichen kann. Ein solcher übermäßiger Druck von der Anpressplatte her kann bspw. von einem blockierten Ritzel herrühren, wobei das Ritzel beispielsweise aufgrund von Korrosion oder aufgrund dessen, dass die Spindelmutter die Endlage an der Spindel erreicht hat und mithin das verstellbare Maß an Verschleiß überschritten ist, blockieren kann. Ferner kann vorgesehen sein, dass ein an der Spindelmutter gebildeter Zahnabschnitt formschlüssig in die Verstelleinrichtung eingreift, so dass eine durch ein Verdrehen der Spindel um die Spindelachse bewirkte Bewegung der Spindelmutter längs der Spindelachse eine Verstellbewegung der Verstelleinrichtung bewirkt. Die geschilderte Ausgestaltung der Verstelleinrichtung und/oder der Nachstelleinrichtung bietet eine kostengünstige und zuverlässige Möglichkeit, weggesteuert den Verschleiß im Klemmbereich zu erfassen und den Verschleiß auszugleichen. Es ist allerdings festzuhalten, dass auch andere weggesteuert verschleißerfassende Ausgestaltungen der Nachstelleinrichtung mit der Reibkupplung gemäß dieser Erfindung explizit kombinierbar sind.

Gemäß einem weiteren Aspekt der vorliegenden Erfindung ist der Kupplungsdeckel dazu vorbereitet, mit der Druckplatte fest verbunden zu werden.

Gemäß einem weiteren Aspekt der vorliegenden Erfindung ist zwischen der Anpressplatte und der Kupplungsscheibe und/oder zwischen der Kupplungsscheibe und der Druckplatte ein Reibbelag vorgesehen. Der Reibbelag kann mit der Kupplungsscheibe drehfest verbunden sein, kann mit der Anpressplatte drehfest verbunden sein und/oder kann mit der Druckplatte drehfest verbunden sein. Insbesondere kann der Reibbelag in einer Umfangsrichtung um die Axialrichtung der Reibkupplung herum in Sektoren unterteilt sein.

Gemäß einem weiteren Aspekt der vorliegenden Erfindung kann der Hebel eine Tellerfeder sein. Die Tellerfeder kann in einem radial außenliegenden Bereich als Kraftrand gebildet sind, und/oder kann in einem radial innenliegenden Bereich als Tellerfederzungen gebildet sein. Dies hat den Vorteil, dass in dem radial außenliegenden Bereich eine durchgängige Anlagefläche an die Verstelleinrichtung gewährleistet ist, und dass die Tellerfedercharakteristik durch Einstellen der Breite der einzelnen Tellerfederzungen eingestellt werden kann.

Gemäß einem weiteren Aspekt der vorliegenden Erfindung ist der Hebel an dem Kupplungsdeckel mit einem Schwenklager, bzw. einer Schwenkauflage schwenkbar gelagert. Dabei kann sich das Schwenklager zwischen einem Bereich der Krafteinleitung in den Hebel und einem Bereich, an welchem der Hebel an die Verstelleinrichtung anschlägt, befinden.

Gemäß einem weiteren Aspekt der vorliegenden Erfindung ist das Schwenklager an einem Bereich des Hebels zwischen einem Krafteinleitungsbereich, an welchem der Hebel zur Anlage an eine Krafteinleitungsvorrichtung vorbereitet ist, bzw. der Hebel an eine Krafteinleitungsvorrichtung anliegen kann, und einem Bereich, an welchem der Hebel an die Verstelleinrichtung anliegen kann, bzw. anschlägt, gebildet, wobei das Schwenklager zumindest einen Niet, einen Ring bzw. Drahtring zwischen dem Kupplungsdeckel und dem Hebel und einen Ring bzw. Drahtring zwischen dem Hebel und einem hebelseitigen Kopf des Niets umfasst, wobei diese Ringe jeweils einen näherungsweise kreisförmigen Querschnitt aufweisen. Der Niet stellt ein kostengünstiges und einfach zu formendes Festhalteelement bzw. Verbindeelement dar, und die beiden Ringe sind sowohl mit einfachen Mitteln formbar, wie auch bieten sie durch ihre runde Querschnittsform eine besonders geeignete, beispielsweise verkantungsfreie Anlage an den Hebel.

Gemäß einem weiteren Aspekt der vorliegenden Erfindung kann das Schwenklager an einem radial außenliegenden Bereich des Hebels gebildet sein, an welchem der Hebel an die Verstelleinrichtung anliegen kann, bzw. anschlägt, wobei das Schwenklager zumindest einen Ring, bzw. Drahtring zwischen dem Kupplungsdeckel und dem Hebel umfasst, wobei der Ring einen näherungsweise kreisförmigen Querschnitt aufweist. Die oben genannten Eigenschaften gelten entsprechend.

Mit anderen Worten, um den möglichen Relativweg in der Nachstelleinrichtung, bspw. zwischen Klinke und Ritzel, beim weggesteuerten Erfassen eines Verschleißes im Klemmbereichindirekt zu begrenzen, wird der mögliche Ausrückweg der Anpressplatte durch einen deckelseitigen Anschlag begrenzt. Erfindungsgemäß ist auf der Innenseite des Kupplungsdeckels ein Anschlag vorgesehen, welcher bspw. auf die Verstelleinrichtung, auf die Tellerfeder im Bereich der Verstelleinrichtung, auf die Tellerfeder im Bereich einer Krafteinleitung in den Hebel, oder auf eine zweite Verstelleinrichtung wirkt. Der Hebel, bzw. die Tellerfeder, bzw. der Kraftrand der Tellerfeder kann bei Bedarf in diesem Bereich mit einer Aussparung versehen sein. Alternativ kann der deckelseitige Anschlag am Innenrand des ringförmigen, die Ebene der Tellerfeder durchstoßenden Kupplungsdeckels ausgebildet sein und mit den Tellerfederzungen beim Ausrücken in Anlage kommen. Ebenso ist es möglich, dass der Anschlag zwischen den deckelseitigen Tellerfederzentrierbolzen und der Anpressplatte zustande kommt.

Mit anderen Worten, es wird vorgeschlagen, den Weg, welchen die Nachstelleinrichtung den Verschleiß im Klemmbereich wegfühlend, bzw. weggesteuert erfasst, indirekt zu begrenzen, indem der Weg der Anpressplatte gegenüber dem Deckel bzw. dem gegenüber dem Deckel fest verbundenen Schwungrades begrenzt wird. Insbesondere und beispielhaft ist dies ein Weg zwischen einem Ritzel und einer Klinke der Nachstelleinrichtung, welcher auch als Freilaufweg bezeichnet wird. Diese Anpressplattenwegbegrenzung kann erfolgen durch einen Anschlag zwischen Nachstelleinrichtung und Kupplungsdeckel, zwischen einem radial außenliegenden Bereich des Hebels, bzw. Tellerfederrand, und dem Kupplungsdeckel, zwischen einem radial innenliegenden Bereich des Hebels, bzw. den Tellerfederzungen, und dem Kupplungsdeckel, oder zwischen einer zweiten Nachstelleinrichtung und dem Kupplungsdeckel. Da hiermit der maximale Anpressplattenweg sicher begrenzt wird, ist auch der mögliche dynamische Relativweg der Nachstelleinrichtung beschränkt. Somit löst die vorliegende Erfindung die Aufgabe, durch Anpressplatten Axialschwingungen verursachte, ungewollte dynamische Nachstellungen zu verhindern.

Die Erfindung wird nachfolgend mit Hilfe dreier Ausführungsformen näher beschrieben. Es zeigen:
- Fig. 1: eine Schnittansicht einer nicht erfindungsgemäßen ersten Reibkupplung in Betriebspunktlage,
- Fig. 2: eine Schnittansicht der ersten Reibkupplung in Betriebspunktlage mit einer beispielhaft skizzierten Nachstelleinrichtung,
- Fig. 3: eine Schnittansicht der ersten Reibkupplung gemäß einer Modifikation in Betriebspunktlage,
- Fig. 4: eine Schnittansicht der ersten Reibkupplung gemäß der Modifikation in Abhublage,
- Fig. 5: eine Schnittansicht einer nicht erfindungsgemäßen zweiten Reibkupplung in Betriebspunktlage mit einer beispielhaft skizzierten Nachstelleinrichtung,
- Fig. 6: eine Schnittansicht der zweiten Reibkupplung in Abhublage mit einer beispielhaft skizzierten Nachstelleinrichtung,
- Fig. 7: eine Schnittansicht der zweiten Reibkupplung gemäß einer Modifikation in Betriebspunktlage mit beispielhaft skizzierter Nachstelleinrichtung,
- Fig. 8: eine Schnittansicht der zweiten Reibkupplung gemäß der Modifikation in Abhublage mit beispielhaft skizzierter Nachstelleinrichtung,
- Fig. 9: eine Schnittansicht einer dritten Reibkupplung in Arbeitspunktlage mit beispielhaft skizzierter Nachstelleinrichtung,
- Fig. 10: eine Schnittansicht der dritten Reibkupplung in Abhublage mit beispielhaft skizzierter Nachstelleinrichtung, und
- Fig. 11: ein Wegverhältnisdiagramm, welches die Ausführungsformen der Erfindung beschreibt.

Die Figuren sind lediglich schematischer Natur und dienen nur dem Verständnis der Erfindung. Die gleichen Elemente sind mit denselben Bezugszeichen versehen.

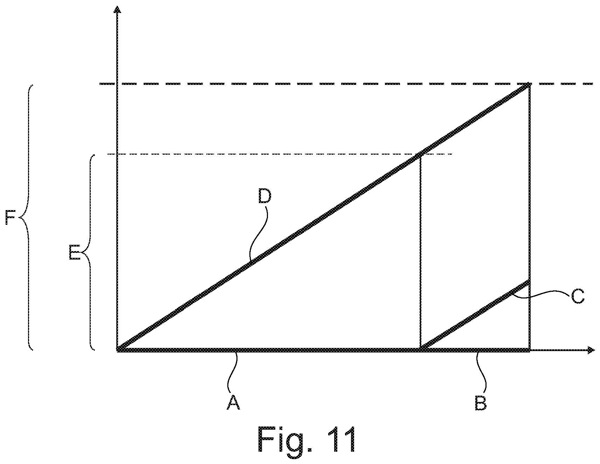

Die Fig. 11 ist ein Wegdiagramm, die Erfindung verdeutlicht. Gemäß dieser Erfindung sind die Längen bzw. die Wege bei einer weggesteuert Verschleiß erfassenden Nachstelleinrichtung und/oder bei einer Verstelleinrichtung bzw. bei mehr als einer Verstelleinrichtungen so bemessen, dass zum Erfassen des Veschleißes und/oder zum Verstellen der Verstelleinrichtung eine näherungsweise vollständige Einrückbewegung und/oder eine näherungsweise vollständige Ausrückbewegung notwendig ist.

In Fig. 11 bezieht sich die Vertikalachse (Ordinatenachse) auf einen Weg, welchen die Anpressplatte bei der Einrückbewegung oder der Ausrückbewegung zurück legt. Die Horizontalachse bezieht sich auf einen Weg, welcher in der weggesteuert erfassenden Nachstelleinrichtung erfasst wird. Dabei bezeichnet D eine tatsächliche Verlagerung der Eingangsgröße in die weggesteuert erfassende Nachstelleinrichtung. Dabei bezeichnet A einen Weg, entlang welchem kein Verschleiß erfasst wird. Dabei bezeichnet E einen Weg einer teilweisen Ausrückbewegung und bezeichnet F eine vollständige Ausrückbewegung. Der Weg E entspricht dem Weg A.

Wird die erfasste Verlagerungsweglänge auf E eingestellt, so wird nach Überwinden des Weges A ein Verschleiß erfasst und nachgestellt. Verlagert sich eine Anpressplatte um den Weg F, erfolgt keine weitere Verstellung, siehe Weglänge C. Eine Axialschwingung der Anpressplatte um die Länge E herum führt aber zu mehreren ungewollten Nachstellvorgängen.

Wird die erfasste Verlagerungsweglänge auf F eingestellt, so wird nach überwinden des Weges A+B ein Verschleiß erfasst und nachgestellt. Eine Axialschwingung um die Länge E herum führt zu keinem Nachstellvorgang. Wird der maximale Verlagerungsweg durch einen kupplungsdeckelfesten Anschlag auf die Länge F begrenzt, sind keine Schwingungen um die Länge F herum möglich. Daher werden ungewollte Nachstellvorgänge zuverlässig verhindert.

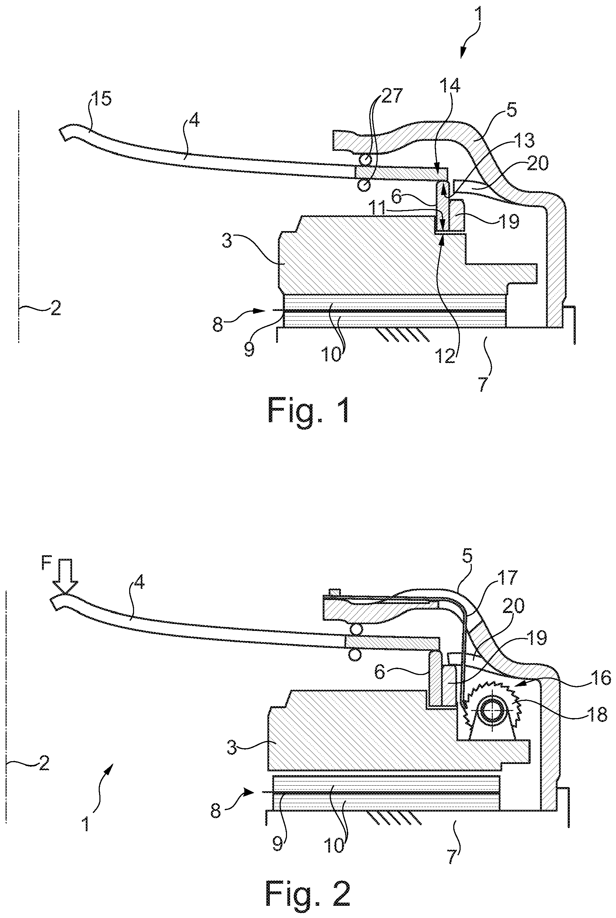

Fig. 1 zeigt eine Schnittansicht einer ersten Reibkupplung 1. Die Reibkupplung 1 weist eine Hauptachse 2 auf, um welche die Reibkupplung im Betrieb zu rotieren vermag. Die Reibkupplung weist eine Anpressplatte 3, einen als Tellerfeder 4 gebildeten Hebel, einen Kupplungsdeckel 5 und eine Verstelleinrichtung 6 auf. Die Verstelleinrichtung 6 ist zwischen der Tellerfeder 4 und der Anpressplatte 3 vorgesehen. Die Reibkupplung 1 ist mit einer Druckplatte 7 fest verbunden. Zwischen der Druckplatte 7 und der Anpressplatte 3 befindet sich eine Kupplungsscheibe 8. Die Kupplungsscheibe 8 umfasst eine Trägerscheibe 9 und Reibbeläge 10. Die Reibbeläge 10 sind fest mit der Trägerplatte 9 verbunden.

Die Verstelleinrichtung 6 ist als ein Rampenring mit Rampen 11 gebildet. Der Rampenring erstreckt sich in einer Umfangsrichtung um die Hauptachse 2. An der Anpressplatte 3 sind Gegenrampen 12 gebildet. Die Gegenrampen 12 sind komplementär zu den Rampen 11 gebildet. An einem den Rampen 11 entgegenliegenden Ende des Rampenrings 6 ist ein Anschlagsabschnitt 13 gebildet. In der Betriebspunktlage liegt ein radial außenliegender Abschnitt 14 der Tellerfeder 4 an dem Anschlagsabschnitt 13 der Verstelleinrichtung 6 an.

Der Hebel 14 ist zwischen zwei Drahtringen 27 gelagert, welche durch einen Niet (nicht dargestellt) an dem Kupplungsdeckel 5 gehalten bzw. gelagert sind. Zwischen den Drahtringen 27 wird die Tellerfeder 4 an dem Kupplungsdeckel 5 gelagert. Die Tellerfeder 4 weist ferner einen Krafteinleitungsabschnitt 15 auf. Die Reibkupplung 1 ist eine gedrückte Kupplung, so dass in Betriebspunktlage üblicherweise keine oder höchstens eine geringe Kraft auf den Krafteinleitungsabschnitt 15 wirkt bzw. bewirkt wird. Die Tellerfeder 4 drückt aufgrund ihrer Geometrie über die Drahtringe 27 auf den Kupplungsdeckel 5 und drückt ebenso über den radial außenliegenden Abschnitt 14 auf den Anschlagabschnitt 13 des Rampenrings 6. Der Rampenring 6 drückt über die Rampen 11 auf die Gegenrampen 12 der Anpressplatte 3. Die Anpressplatte 3 drückt gegen einen der Reibbeläge 10. Der andere der Reibbeläge 10 drückt gegen die Druckplatte 7. Da die Druckplatte 7 mit dem Kupplungsdeckel 5 fest verbunden ist, ist der Kraftverlauf geschlossen.

Im Folgenden stellen gleiche Bezugszeichen gleiche Teile dar, und von einer Wiederholung der Beschreibung derselben wird abgesehen.

Fig. 2 zeigt die Reibkupplung 1 mit einer exemplarisch skizzierten Nachstelleinrichtung 16 in Abhublage. Die Nachstelleinrichtung 16 umfasst eine Klinke 17, ein Ritzel 18, sowie eine Spindel (nicht dargestellt) und eine Spindelmutter (nicht dargestellt). Die Klinke 17 ist federnd an dem Kupplungsdeckel 5 gelagert. Wenn die Anpressplatte 3 in Betriebspunktlage gebracht wird, während ein Verschleiß im Klemmbereich ein vorab festgelegtes Maß überschritten hat, kommt die Klinke 17 mit einem Zahn des Ritzels 18 in formschlüssigen Eingriff. Andernfalls liegt die Klinke 17 an dem Ritzel 18 an, ohne formschlüssig einzugreifen. In Fig. 2 ist formschlüssiger Eingriff dargestellt, also liegt Verschleiß vor. An der Spindelmutter ist ein Zahnabschnitt (nicht dargestellt) gebildet. Dieser Zahnabschnitt greift formschlüssig in die Verstelleinrichtung 6 ein. Wenn sich nun die Anpressplatte 3 von der Kupplungsscheibe 8 weg bewegt, bzw. weg bewegt wird, so drückt das Ritzel tangential zu der Spindelachse auf das Ritzel. Deswegen drehen sich das Ritzel und die Spindel. Deswegen bewegt sich die Mutter auf der Spindel. Deswegen wird der Zahnabschnitt zu der Verstelleinrichtung tangential bewegt. Deswegen wird die Verstelleinrichtung in Umfangsrichtung der Hauptachse 2 verdreht. Deswegen gleiten die Rampen 11 auf den Gegenrampen 12. Deswegen wird der Abstand des Anlageabschnitts 13 von der Anpressplatte 3 vergrößert. Somit erfasst die Nachstelleinrichtung 16 weggesteuert den Verschleiß im Klemmbereich und wird mit der zwischen der Anpressplatte 3 und der Tellerfeder 4 angeordneten Verstelleinrichtung 6 der Verschleiß ausgeglichen.

An der Verstelleinrichtung 6 ist ein Stützteil 19 fest angebracht. An dem Kupplungsdeckel 5 ist ein kupplungsdeckelfester Anschlag 20 gebildet. Zwischen dem Kupplungsdeckel 5 und der Anpressplatte 3 ist eine Hubeinrichtung (nicht dargestellt) angebracht. Beispielsweise hat diese Hubeinrichtung die Form von Blattfedern. Beispielsweise sind diese Blattfedern in regelmäßigen Abständen in Umfangsrichtung um die Hauptachse 2 herum angeordnet. Die Hubeinrichtung übt eine Hubkraft auf die Anpressplatte aus, welche in Axialrichtung von der Kupplungsscheibe 8 bzw. der Druckplatte 7 weg wirkt. Die Hubkraft der Hubeinrichtung ist geringer als eine Vorspannkraft, welche die Tellerfeder 4 aufgrund ihrer Geometrie auf die Verstelleinrichtung 6 auszuüben vermag. Das heißt, dass die Tellerfeder 4 aufgrund ihrer Geometrie im Normalfall bzw. im unbetätigten Fall bzw. im geschlossenen Fall die Anpressplatte 3 auf die Druckplatte 7 zu drückt und somit in Betriebspunktlage die Kupplungsscheibe 8 zwischen Anpressplatte 3 und Druckplatte 7 festgeklemmt wird. Wird eine Betätigungskraft F auf die Tellerfeder in dem Krafteinleitungsabschnitt aufgebracht, so führt diese Kraft F zu einer Verformung der Tellerfeder 4. Ist die Kraft F groß genug, so ist die Tellerfederkraft, welche auf die Verstelleinrichtung 6 wirkt, geringer als die Hubkraft. Infolgedessen wird die Anpressplatte 6 von der Kupplungsscheibe 8 abgehoben.

Der kupplungsdeckelfeste Anschlag 20 kragt derart aus dem Kupplungsdeckel 5 aus, dass, nachdem die Anpressplatte 3 und die Verstelleinrichtung 6 einen maximalen Anpressplattenweg überwunden haben, das Stützteil 19 mit dem kupplungsdeckelfesten Anschlag 20 in Anlage kommt. Somit drückt die Hubeinrichtung auf die Anpressplatte 3, welche wiederum über die Gegenrampen 12 auf die Rampen 11 der Verstelleinrichtung 6 auf das Stützteil 19 wirkt, welches gegen den kupplungsdeckelfesten Anschlag 20 drückt. Somit ist ein Kraftverlauf geschlossen. Dabei beträgt die Hubkraft, welche in dieser Abhublage auf die Anpressplatte 3 wirkt zumindest 5 % der Hubkraft, welche in Betriebspunktlage auf die Anpressplatte 3 wirkt. Dadurch liegt die Anpressplatte stabil an dem Kupplungsdeckel an. Dadurch wird verhindert, dass Vibrationen eines Kraftfahrzeuges (nicht dargestellt), in welchem die Kupplung betrieben wird, Anpressplattenschwingungen erzeugen. Somit wird verhindert, dass durch Anpressplattenschwingungen eine sog. dynamische Nachstellung erfolgt. Somit wird verhindert, dass durch Anpressplattenschwingungen die Klinke 17 in Eingriff mit dem Ritzel 18 gelangt.

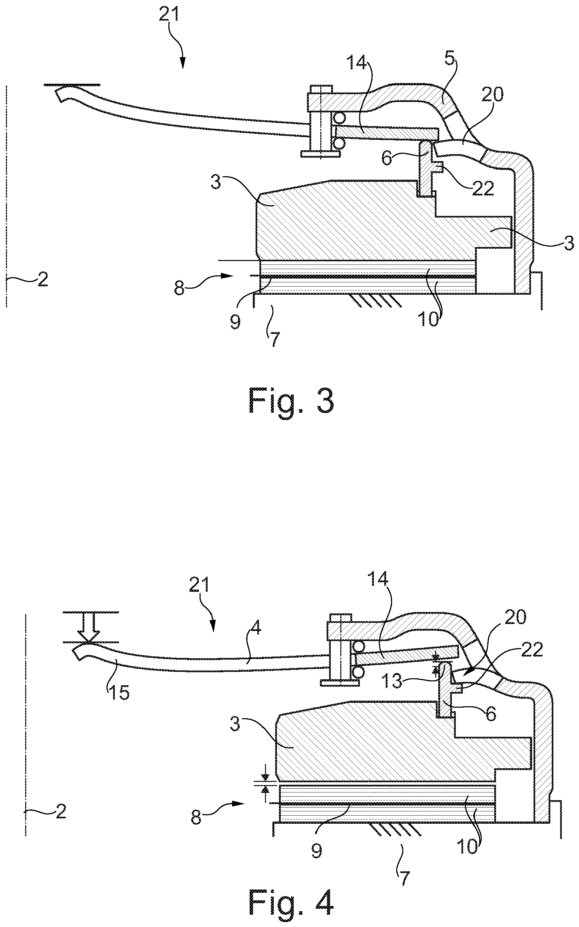

Die Fig. 3 und 4 zeigen eine Reibkupplung 21, welche eine Modifikation der ersten Reibkupplung 1. Die Reibkupplung 21 unterscheidet sich von der Reibkupplung 1 dadurch, dass anstelle eines mit der Verstelleinrichtung 6 fest verbundenen Stützteiles 19 ein an der Verstelleinrichtung 6 vorgesehener Stützabschnitt 22 gebildet ist. Fig. 3 zeigt die Reibkupplung 21 in Betriebspunktlage, d.h., dass die Anpressplatte 3 und die Druckplatte 7 die Kupplungsscheibe 8 verklemmen.

Fig. 4 zeigt die Reibkupplung 21 in Abhublage. Der Stützabschnitt 22 ist in Anlage mit dem kupplungsfesten Anschlag 20. Wie durch einen fett dargestellten Pfeil angedeutet, ist der Krafteinleitungsabschnitt der Tellerfeder 4 in hohem Maße bewegt worden. Dies hat zur Folge, dass der radial außenliegende Abschnitt 14 der Tellerfeder 4 nicht mehr an dem Anlageabschnitt 13 der Verstelleinrichtung 6 anliegt. Insofern zeigt Fig. 4 einen Extremfall der Abhublage.

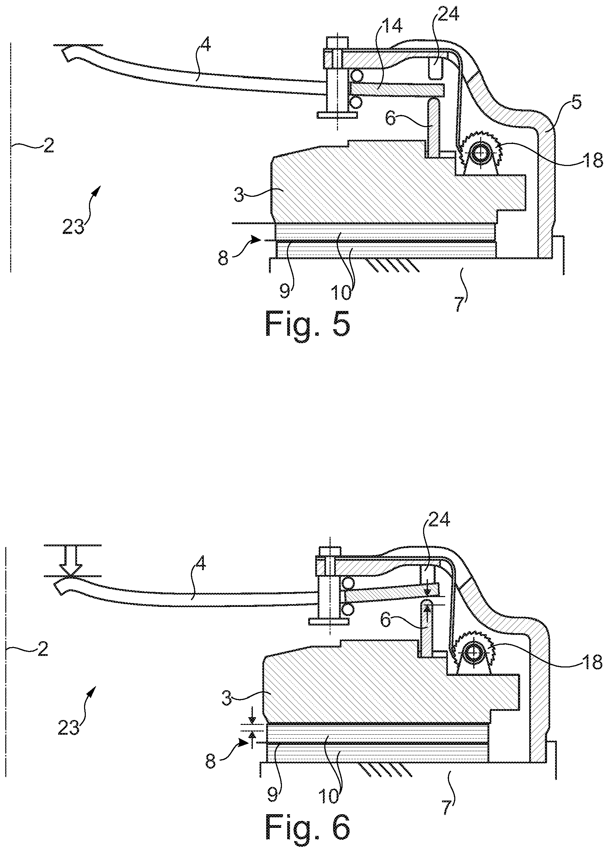

Die Fig. 5 und 6 zeigen eine zweite Reibkupplung 23. Im Folgenden wird nur auf die Unterschiede zur ersten Reibkupplung 1 eingegangen. An dem Kupplungsdeckel 5 ist ein kupplungsdeckelfester Anschlag 24 fest angebracht. Der Anschlag 24 befindet sich an dem Kupplungsdeckel 5 in Verlängerung der Verstelleinrichtung 6. In Betriebspunktlage gemäß Fig. 5 wirkt die Tellerfeder 4 wie bei der ersten Reibkupplung 1 auf die Verstelleinrichtung 6. In Abhublage gemäß Fig. 6 wirkt die nicht dargestellte Hubeinrichtung auf die Anpressplatte 3, welche auf die Verstelleinrichtung 6 wirkt. Die Verstelleinrichtung 6 wirkt über den Anschlagabschnitt 13 auf den radial außenliegenden Abschnitt 14 der Tellerfeder 4. Der radial außenliegende Abschnitt 14 wirkt auf den kupplungsdeckelfesten Anschlag 24. Es liegt also ein geschlossener Kraftverlauf vor. Der kupplungsdeckelfeste Anschlag 24 kann als separates Teil ausgeführt werden oder kann aus dem Deckel 5 ausgebildet bzw. ausgeformt werden.

Mit anderen Worten, der kupplungsdeckelfeste Anschlag 24 am Kupplungsdeckel 5 begrenzt den Bewegungsbereich des Tellerfederrandes 14. Folglich ist der Abhubweg der Anpressplatte 3 begrenzt und somit ist auch der wirksame Weg für die Nachstelleinrichtung 16 begrenzt.

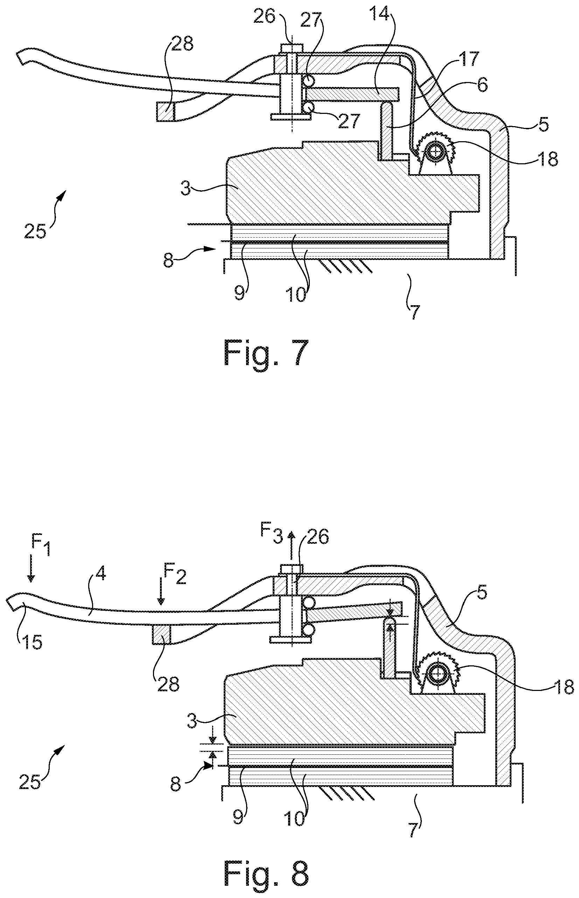

Die Fig. 7 und 8 zeigen eine zweite Reibkupplung 25 gemäß einer ersten Modifikation. Die Tellerfeder 4 ist über einen Niet 26 sowie die Drahtringe 27 am Kupplungsdeckel 5 gelagert. Der Kupplungsdeckel 5 weist einen radial nach innen gerichteten Abschnitt auf, an welchem ein kupplungsdeckelfester Anschlag 28 gebildet ist.

In Fig. 7 ist die Betriebspunktlage dargestellt. Die Tellerfeder 4 wirkt über den radial außenliegenden Abschnitt 14 auf die Verstelleinrichtung 6, welche wiederum auf die Anpressplatte 3 wirkt, so dass die Kupplungsscheibe 8 zwischen der Anpressplatte 3 und der Druckplatte 7 festgeklemmt wird.

In Fig. 8 ist die Abhublage in Anschlagslage dargestellt. Eine Kraft F₁ wird am Krafteinleitungsabschnitt 15 in die Tellerfeder 4 eingeleitet. Infolgedessen wirkt eine Kraft F₂ auf den kupplungsdeckelfesten Anschlag 28. Da der kupplungsdeckelfeste Anschlag 28 zwischen dem Niet 26 und dem Krafteinleitungsabschnitt 15 vorgesehen ist, wirkt eine Kraft F₃ auf den Niet in Richtung des Deckels 5. Dies hat den Vorteil, dass ein Kopf des Niets 26 nicht durch die Betätigungskraft belastet wird. Im Übrigen gilt die oben stehenden Beschreibung.

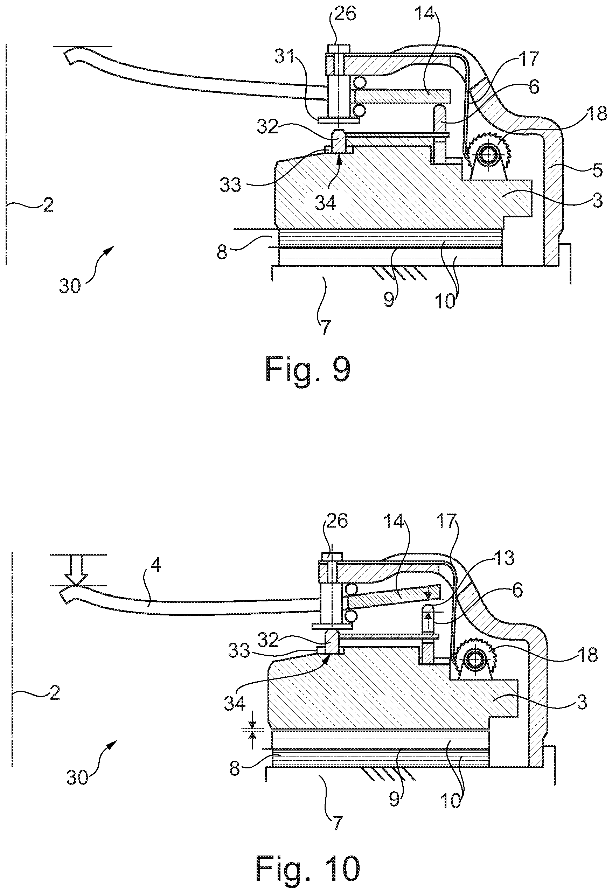

Die Fig. 9 und 10 stellen eine dritte Reibkupplung 30 dar. Im Folgenden wird auf die Unterschiede der Reibkupplung 30 im Vergleich zu den Reibkupplungen 1, 21, 23, 25 eingegangen. Mit der Verstelleinrichtung 6 ist eine zweite Verstelleinrichtung 32 derart verbunden, dass ein Verdrehen der Verstelleinrichtung 6 um die Hauptachse 2 herum ein Verdrehen der zweiten Verstelleinrichtung 32 um die Hauptachse 2 herum bewirkt. Die zweite Verstelleinrichtung 32 ist als ein Rampenring mit daran gebildeten Rampen 33 gebildet. An der Anpressplatte sind Gegenrampen 34 komplementär zu den Rampen 33 der zweiten Verstelleinrichtung gebildet. Im Übrigen gilt zu der Beziehung der zweiten Verstelleinrichtung 32, der Rampen 33, der Regenrampen 34 und der Anpressplatte 3 das oben Gesagte betreffend die erste Verstelleinrichtung 6, die Rampen 11, die Gegenrampen 12 und die Anpressplatte 13. Das heißt, dass die Nachstelleinrichtung 16 den Verschleiß im Klemmbereich durch Verdrehen der Verstelleinrichtung 6 und durch Verdrehen der zweiten Verstelleinrichtung den weggesteuert erfassten Verschleiß im Klemmbereich entsprechend ausgleicht. An dem Niet 26 ist ein Kopf 31 gebildet. Der Kopf 31 dient als kupplungsdeckelfester Anschlag.

In der in Fig. 9 dargestellten Betriebspunktlage wirkt die Tellerfeder 4 aufgrund ihrer geometrischen Form über den radial außenliegenden Abschnitt 14 auf die Verstelleinrichtung 6, welche die Anpressplatte 3 zum Festklemmen der Kupplungsscheibe 8 in Richtung auf die Druckplatte 7 zu festklemmt. In Abhublage drückt die nicht dargestellte Hubeinrichtung die Anpressplatte 3 in Richtung von der Druckplatte 7 weg, bis die Gegenrampen 34 über die Rampen 33 und die zweite Verstelleinrichtung 32 auf den Kopf 31 des Niets 26 drücken, so dass ein Kraftverlauf geschlossen ist.

### Bezugszeichenliste

- 1: Reibkupplung
- 2: Hauptachse
- 3: Anpressplatte
- 4: Tellerfeder
- 5: Kupplungsdeckel
- 6: Verstelleinrichtung, bzw. Rampenring
- 7: Druckplatte
- 8: Kupplungsscheibe
- 9: Trägerplatte
- 10: Reibbeläge
- 11: Rampen
- 12: Gegenrampen
- 13: Anschlagsabschnitt
- 14: radial außenliegender Abschnitt
- 15: Krafteinleitungsabschnitt
- 16: Nachstelleinrichtung
- 17: Klinke
- 18: Ritzel
- 19: Stützteil
- 20: kupplungsdeckelfester Anschlag
- 21: Reibkupplung
- 22: Stützabschnitt
- 23: Reibkupplung
- 24: kupplungsdeckelfester Anschlag
- 25: Reibkupplung
- 26: Niet
- 27: Ring
- 28: kupplungsdeckelfester Anschlag
- 29: Anschlagsabschnitt
- 30: Reibkupplung
- 31: Kopf
- 32: zweite Verstelleinrichtung
- 33: Rampe
- 34: Gegenrampen

## Patentansprüche

1. Reibkupplung (30) zum Festklemmen einer Kupplungsscheibe (8) zwischen einer Anpressplatte (3) und einer Druckplatte (7) für einen Kraftfahrzeugantriebsstrang, mit einem Kupplungsdeckel (5), an dem ein Hebel (4) schwenkbar gelagert ist, um eine Anpressplatte (3) zum Festklemmen der Kupplung (30) zu verlagern, mit einer weggesteuert Verschleiß im Klemmbereich erfassenden Nachstelleinrichtung (16), mit einer zwischen der Anpressplatte (3) und dem Hebel (4) angeordneten ersten Verstelleinrichtung (6) zum Ausgleichen des Verschleißes, und mit einem kupplungsdeckelfesten Anschlag, **dadurch gekennzeichnet, dass** der Anschlag (31) zum Zusammenwirken mit einer zweiten Verstelleinrichtung (32) vorgesehen ist, derart, dass eine Entfernungsbewegung der Anpressplatte (3) von der Kupplungsscheibe (8) weg begrenzt ist, wobei die zweite Verstelleinrichtung (32) mit der ersten Verstelleinrichtung (6) näherungsweise drehfest verbunden ist.

2. Reibkupplung (30) nach Anspruche 1, **dadurch gekennzeichnet, dass** die zweite Verstelleinrichtung (32) ein Rampenring mit daran gebildeten Rampen (33) ist, wobei sich der Rampenring (32) bezogen auf eine Axialrichtung (2) der Kupplungseinrichtung (30) in Umfangsrichtung erstreckt, und wobei die Rampen (33) der zweiten Verstelleinrichtung (32) an zu den Rampen (33) der zweiten Verstelleinrichtung (32) komplementär an der Anpressplatte (3) gebildeten Gegenrampen (34) anliegen, so dass ein Verdrehen der zweiten Verstelleinrichtung (32) in Umfangsrichtung der Reibkupplung (30) relativ zu der Anpressplatte (3) eine Abstandsänderung zwischen der Anpressplatte (3) und einem von den Rampen (33) entfernten Abschnitt der zweiten Verstelleinrichtung (32) bewirkt.

3. Reibkupplung (1, 21, 23, 25, 30) nach Anspruch 1 oder 2, **dadurch gekennzeichnet, dass** der durch die Nachstelleinrichtung (16) weggesteuert erfasste Verschleiß im Klemmbereich bei der Entfernungsbewegung der Anpressplatte (3) von der Kupplungsscheibe (8) weg ausgeglichen wird, wobei vorzugsweise der Ausgleich bei der Entfernungsbewegung ab dem Festklemmen bis zu einem Anliegen an den kupplungsdeckelfesten Anschlag (20, 24, 28, 31) ausgeglichen wird.

## Claims

1. Friction clutch (30) for clamping a clutch disc (8) fixedly between a pressing plate (3) and a pressure plate (7) for a motor vehicle drive train, having a clutch cover (5), on which a lever (4) is mounted pivotably, in order to move a pressing plate (3) for clamping the clutch (30) fixedly, having an adjusting device (16) which detects wear in the clamping region in a displacement-controlled manner, having a first adjusting device (6) which is arranged between the pressing plate (3) and the lever (4) for the compensation of the wear, and having a stop which is fixed on the clutch cover, **characterized in that** the stop (31) is provided for interacting with a second adjusting device (32) in such a way that a removal movement of the pressing plate (3) away from the clutch disc (8) is limited, the second adjusting device (32) being connected approximately fixedly to the first adjusting device (6) so as to rotate with it.

2. Friction clutch (30) according to Claim 1, **characterized in that** the second adjusting device (32) is a ramp ring with ramps (33) which are formed thereon, the ramp ring (32) extending in the circumferential direction in relation to an axial direction (2) of the clutch device (30), and the ramps (33) of the second adjusting device (32) bearing against counter-ramps (34) which are formed in the pressing plate (3) in a complementary manner with respect to the ramps (33) of the second adjusting device (32), with the result that a rotation of the second adjusting device (32) in the circumferential direction of the friction clutch (30) relative to the pressing plate (3) brings about a spacing change between the pressing plate (3) and a section of the second adjusting device (32), which section is distanced from the ramps (33).

3. Friction clutch (1, 21, 23, 25, 30) according to Claim 1 or 2, **characterized in that** the wear which is detected in a displacement-controlled manner by way of the adjusting device (16) in the clamping region is compensated for during the removal movement of the pressing plate (3) away from the clutch disc (8), the compensation preferably being compensated for during the removal movement from clamping fixedly up to bearing against the stop (20, 24, 28, 31) which is fixed on the clutch cover.

## Revendications

1. Embrayage à friction (30) pour serrer à bloc un disque d'embrayage (8) entre une plaque de pressage (3) et une plaque de pression (7) pour une chaîne cinématique d'un véhicule automobile, avec une coiffe d'embrayage (5) au niveau de laquelle un levier (4) est supporté de manière pivotante de manière à déplacer une plaque de pressage (3) pour serrer à bloc l'embrayage (30), avec un dispositif de rattrapage à course commandée (16) détectant l'usure dans la région de serrage, avec un premier dispositif de réglage (6) disposé entre la plaque de pressage (3) et le levier (4) pour compenser l'usure et avec une butée fixée à la coiffe d'embrayage, **caractérisé en ce que** la butée (31) est prévue pour coopérer avec un deuxième dispositif de réglage (32) de telle sorte qu'un mouvement d'éloignement de la plaque de pressage (3) à l'écart du disque d'embrayage (8) soit limité, le deuxième dispositif de réglage (32) étant connecté approximativement de manière solidaire en rotation au premier dispositif de réglage (6).

2. Embrayage à friction (30) selon la revendication 1, **caractérisé en ce que** le deuxième dispositif de réglage (32) est une bague à rampes avec des rampes (33) formées sur celle-ci, la bague à rampes (32) s'étendant dans la direction périphérique par rapport à une direction axiale (2) du dispositif d'embrayage (30), et les rampes (33) du deuxième dispositif de réglage (32) s'appliquant contre des rampes conjuguées (34) formées sur la plaque de pressage (3) de manière complémentaire aux rampes (33) du deuxième dispositif de réglage (32) de telle sorte qu'une rotation du deuxième dispositif de réglage (32) dans la direction périphérique de l'embrayage à friction (30) par rapport à la plaque de pressage (3) provoque une variation de distance entre la plaque de pressage (3) et une partie du deuxième dispositif de réglage (32) éloignée des rampes (33).

3. Embrayage à friction (1, 21, 23, 25, 30) selon la revendication 1 ou 2, **caractérisé en ce que** l'usure détectée de manière commandée en fonction de la course par le dispositif de rattrapage (16) dans la région de serrage est compensée lors du mouvement d'éloignement de la plaque de pressage (3) à l'écart du disque d'embrayage (8), la compensation étant de préférence effectuée lors du mouvement d'éloignement à partir du serrage à bloc jusqu'à une application contre la butée (20, 24, 28, 31) fixée à la coiffe d'embrayage.
